# EUROPÄISCHE PATENTSCHRIFT

(11) **EP 4 463 907 B1**
(45) Veröffentlichungstag und Bekanntmachung des Hinweises auf die Patenterteilung: **12.11.2025**
(21) Anmeldenummer: 22843116.9
(22) Anmeldetag: 19.12.2022
(51) Int. Cl.: H01M 10/54

(54) **VERFAHREN ZUM AUFBEREITEN VON ZU RECYCELNDEN BATTERIEN UND AUFBEREITUNGS-ANLAGE**
METHOD FOR PREPARING BATTERIES TO BE RECYCLED, AND PREPARATION SYSTEM
PROCÉDÉ DE TRAITEMENT DE BATTERIES À RECYCLER ET INSTALLATION DE TRAITEMENT

(30) Priorität: 11.01.2022 DE 102022100468
(43) Veröffentlichungstag der Anmeldung: 20.11.2024
(73) Patentinhaber: Scholz Recycling GmbH, 73457 Essingen (DE); Andritz AG, 8045 Graz (AT)
(72) Erfinder: HERMSDORF, Uwe, 09244 Lichtenau (DE); GIESSNER, Philipp, 04229 Leipzig (DE); WEISSFLOG, Kay, 04571 Rötha (DE); WUSCHKE, Lutz, 04720 Westewitz (DE)
(74) Vertreter: Lüdtke, Thomas
(86) Internationale Anmeldenummer: PCT/DE2022/100968
(87) Internationale Veröffentlichungsnummer: WO 2023/134816

(56) Entgegenhaltungen:
- US-A1- 2018 301 769
- US-A1- 2019 260 101
- US-A1- 2021 359 312

## Beschreibung

Die vorliegende Erfindung betrifft ein Verfahren zum Aufbereiten von zu recycelnden Batterien, beispielweise einer Li-Ionen-Batterien, sowie eine Aufbereitungs-Anlage zur Durchführung des Verfahrens.

Aufgrund der steigenden Nachfrage nach wieder aufladbaren Batterien (Akkumulatoren), insbesondere mit Li-Ionen-Batteriezellen, sowohl für netzunabhängige, elektronische Kleingeräte (Kopfhörer, Handys, etc.) als auch für Elektro-Fahrzeuge (Traktionsbatterien) bzw. konventionelle Fahrzeuge (Starterbatterien) oder als Energiespeicher z. B. für Photovoltaikanlagen oder als Pufferspeicher für Energiespitzen werden zukünftig erhöhte Mengen an zu recycelnden Li-Batterien anfallen, wenn diese ihr Lebensende erreicht haben. Das ist zumeist nach 8-10 Jahren der Fall, wenn die Kapazität der Batterien auf 80 % oder weniger degradiert ist.

Bei der Aufbereitung der Altbatterien wurden mechanische Recyclingrouten konzipiert und realisiert. Im Rahmen dieser Aufbereitungsszenarien, sind normalerweise eine Reihe von mechanischen, elektrischen und chemischen bzw. thermischen Prozessen vorgesehen, die dazu dienen, die Batterien bzw. die Batteriezellen in ihre Einzelteile zu zerlegen und dabei das elektrische Gefährdungspotential, das insbesondere durch Brände, Explosionen und daraus resultierender Schadstoffemissionen ausgeht, zu minimieren. Zu den elektrischen Prozessen zählt insbesondere eine vorbereitende Entladung der Batterien und zu den mechanischen Prozessen insbesondere eine vorbereitende Demontage, eine mechanische Zerkleinerung sowie eine nachfolgende Sortierung/Klassierung mit entsprechender Abführung der jeweils erhaltenen Komponenten.

Daneben sorgen thermische Prozesse insbesondere dafür, dass die in der zu recycelnden Batterie vorhandenen chemischen Stoffe, insbesondere Lösemittel eines Elektrolyts der einzelnen Batteriezellen oder andere elektrochemisch aktive Stoffe, verdampft bzw. inaktiviert werden, beispielsweise durch einen vorbereitenden Trocknungsschritt bei entsprechender Trocknungstemperatur. Nach dieser thermischen Vorbehandlung geht von diesen elektrochemisch aktiven Stoffen bei der nachfolgenden Aufbereitung kein erhöhtes Gefährdungspotential mehr aus. Ergänzend kann als thermischer Prozess eine Pyrolyse bei sehr hohen Zersetzungstemperaturen von bis zu 900°C vorgesehen sein, insbesondere um einen das Aktivmaterial (Lithium) der Batteriezelle haltenden Binder zu zersetzen und so das Aktivmaterial zurückgewinnen zu können. Dies ist beispielhaft in DE 10 2011 110 083 B4 beschrieben. Gleichzeitig werden durch diesen Pyrolyseprozess aber auch weitere elektrochemisch aktive Lösemittel zersetzt, was gleichzeitig bedeutet, dass diese Lösemittel nachfolgend nicht mehr stofflich verwertet werden können.

Eine thermische Vorbehandlung der gebrauchten Batterien bzw. der darin enthaltenen einzelnen Batteriezellen zum Verdampfen der Lösemittel des Elektrolyts ist dabei beispielsweise auch von der Fa. ACCUREC/Mühlheim bekannt, wonach eine thermische Vorbehandlung bei Trocknungstemperaturen von ca. 200°C mit einem Pyrolyse-Prozess in einem Vakuumofen kombiniert wird. In dem Pyrolyse-Prozess wird dabei bei Zersetzungstemperaturen von zwischen 400°C und 500°C der gesamte organische Anteil der Batterien bzw. Batteriezellen (Hüll- und Separatorkunststoffe, Elektrolyte und weitere organische Komponenten) in Pyrolysegas und Pyrolysekoks umgewandelt. Die durch den Pyrolysekoks verunreinigten Komponenten können nachfolgend in einem konventionellen mechanischen Aufbereitungs-Prozess mittels mechanischer Zerkleinerung und Sortierung bzw. Klassierung gesäubert und separiert werden.

Nachteilig hierbei ist, dass die Pyrolyse im Drehrohr- oder Schachtofen sehr hohe Zersetzungstemperaturen erfordert, so dass der Pyrolyseprozess vergleichsweise aufwändig und teuer ist und auch eine nachteilige Geruchsentwicklung verursacht. Zudem ist die Rückgewinnung von hochwertigen Schichtkomponenten aus dem Pyrolysekoks erschwert und der nach der Sortierung/Klassierung verbleibende Pyrolysekoks ist teuer als Sondermüll zu entsorgen, was den gesamten Aufbereitungsprozess unwirtschaftlicher macht.

Um dies zu umgehen, ist in DE 10 2015 207 843 B4 beispielsweise vorgesehen, in einer Aufbereitungs-Anordnung (Batterie-Verarbeitungsanlage) in einem laufenden Prozess die Batterien bzw. die Batteriezellen nach dem elektrischen Entladen und dem mechanischen Demontieren zunächst mechanisch zu Zerkleinern und anschließend über einen Förderer in einem thermischen Prozess durch Trocknen zu Inaktivieren, wobei niedrige Trocknungstemperaturen von ca. 80°C oder weniger eingestellt werden. Anschließend werden die inaktivierten Batterien im laufenden Prozess über einen weiteren Förderer der weiteren mechanischen Aufbereitung zugeführt.

Nachteilig hierbei ist, dass sich dadurch lediglich die niederverdampfenden bzw. niedrigsiedenden Lösemittel des Elektrolyten in der Batteriezelle abtrennen lassen. Um auch weitere Bestandteile des Elektrolyten aus den zerkleinerten Batterien entfernen zu können, ist in WO 2021/018372 A1 vorgesehen, dass nach dem Inaktivieren der Batterien bei 80°C oder weniger in einem zusätzlichen Schritt das bereits inaktivierte Zerkleinerungsgut in einen zusätzlichen Behälter überführt wird, in dem das bereits inaktivierte Zerkleinerungsgut dann auf eine Elektrolyt-Entfernungstemperatur von über 100°C, insbesondere auf über 150°C erhitzt wird. Ergänzend kann dabei ein Vakuum erzeugt werden, was jedoch nicht zwingend erforderlich ist. Durch dieses zusätzliche Erwärmen auf über 100°C sollen auch hochsiedende Lösemittel des Elektrolyten entfernt werden. Anschließend erfolgt ein Aufschließen des Zerkleinerungsgutes mit konzentrierter Schwefelsäure, um Fluor aus dem Zerkleinerungsgut zu entfernen und ein Aufschlussmaterial zu erhalten, aus dem anschließend nasschemisch zumindest ein metallischer Bestandteil extrahiert werden kann.

Nachteilig hierbei ist, dass bei den in WO 2021/018372 A1 angegebenen Elektrolyt-Entfernungstemperaturen, die nach dem Inaktivieren in dem zusätzlichen Behälter eingestellt werden, nicht sichergestellt werden kann, dass auch jegliche hochsiedenden Lösemittel aus dem Elektrolyten entfernt werden können. Für das Abtrennen jeglicher hochsiedenden Lösemittel wären sehr hohe Verdampfungstemperaturen nötig. Weiterhin beginnen auch kunststoffhaltige Substanzen im Zerkleinerungsgut bei derartig hohen Temperaturen zu schmelzen, wodurch das Zerkleinerungsgut in unerwünschter Weise verändert wird.

Ferner ist das Verfahren in WO 2021/018372 A1 aufwendig, da das Zerkleinerungsgut für die vorangehende Inaktivierung und die nachfolgende Entfernung der hochsiedenden Lösemittel in mehrere Behälter, die auf den jeweiligen Prozessschritt abgestimmt sind, umzufüllen ist und dadurch auch mehrfach entsprechend zu temperieren ist, was den Prozess aufwendig und auch langsam macht. Die jeweils verdampfenden Lösemittelanteile werden dann entsprechend auch getrennt voneinander aus unterschiedlichen Behältern über unterschiedliche Strömungsverbindungen abgeführt, was anlagentechnisch aufwendiger ist.

In EP 3 312 922 A1 ist vorgesehen, lediglich niedrigsiedende Lösemittel abzuführen, wobei bei den genannten Umgebungstemperaturen von kleiner 80°C und bei den genannten Umgebungsdrücken von höchsten 300hPa lediglich sichergestellt ist, dass die niedrigsiedenden Lösemittel verdampfen. Ein Verdampfen und Abführen von hochsiedenden Lösemitteln aus dem Trockner zur nachfolgenden Abgasbehandlung ist indes nicht explizit beschrieben.

In EP 3 836 290 A1 ist ferner vorgesehen, die Batterien bereits vor dem Zerkleinern thermisch zu behandeln und dabei in einem ersten Prozessschritt im Trocknungsbehälter eine Ist-Umgebungstemperatur von zwischen 160°C und 200°C und einen Ist-Umgebungsdruck von unter 10mbar einzustellen, um hochsiedende und niedrigsiedende Lösemittel aus der Batterie abführen und einem Kondensator zuführen zu können. Nachfolgend wird dann in einem zweiten Prozessschritt die Temperatur weiter erhöht auf bis zu 600°C, um weitere Zersetzungsprodukte, wie etwas Kohlenwasserstoffe, abtrennen zu können.

Nachteilig hierbei ist, dass zum einen sehr hohe Temperaturen nötig sind und zum anderen die Lösemittel aus den noch nicht zerkleinerten Batterien abgezogen werden, was den Prozess insgesamt weniger effektiv und unwirtschaftlich macht. So kann beispielsweise nicht sichergestellt werden, dass die Lösemittel bei einem Trocknungsschritt vor der Zerkleinerung vollständig aus der teilweise noch geschlossenen Batterie entweichen können und dass sich die gesamte Batterie im ersten Prozessschritt gleichmäßig ausreichend erwärmen kann, um die entsprechenden Siedetemperaturen zum Verdampfen des jeweiligen Lösemittels innerhalb der gesamten Batterie sicher zu erreichen. US 2019 260 101A offenbart ein Verfahren zur Behandlung von gebrauchten Lithium-Battterien, in dem Das Zerkleinerungsgut inaktiviert wird.

Aufgabe der vorliegenden Erfindung ist daher, ein Verfahren bzw. eine Aufbereitungs-Anlage anzugeben, mit dem bzw. mit der die zu recycelnden Batterien einfach bzw. mit einem geringen zeitlichen und konstruktiven Aufwand und bei geringem Gefährdungspotential aufbereitet werden können.

Diese Aufgabe wird erfindungsgemäß durch ein Verfahren sowie eine Aufbereitungs-Anlage nach den unabhängigen Ansprüchen gelöst. Die Unteransprüche beschreiben bevorzugte Weiterbildungen.

Erfindungsgemäß sind demnach in einem Verfahren zum Aufbereiten von zu recycelnden Batterien, insbesondere Li-Ionen-Batterien, mindestens die folgenden Schritte vorgesehen:
- Bereitstellen mindestens einer zu recycelnden Batterie, wobei diese vorzugsweise bereits entsprechend vorbereitet wurde, insbesondere demontiert (z.B. auf ein Modullevel oder ein Zelllevel) und/oder entladen;
- Zerkleinern der bereitgestellten, zu recycelnden Batterie, um Zerkleinerungsgut zu erhalten, wobei dies vorzugsweise in einem Zerkleinerungsraum unter Inertgas und einem leichten Unterdruck erfolgt, wobei die bereitgestellten Batterien und/oder das daraus entstehende Zerkleinerungsgut im Rahmen einer thermischen Vorbehandlung in dem Zerkleinerungsraum bereits auf eine Zerkleinerungstemperatur von beispielsweise < 100°C, insbesondere auf zwischen 50°C und 70°C, aufgeheizt wird, was zum Erhöhen der Effektivität des nachfolgenden Trocknungsschrittes beitragen kann;
- Überführen des Zerkleinerungsgutes in einen Trocknungsbehälter und thermisches Behandeln bzw. Trocknen des Zerkleinerungsgutes durch Erhöhen einer Ist-Umgebungstemperatur und Verringern eines Ist-Umgebungsdruckes im Trocknungsbehälter, vorzugsweise unter Inertgasatmosphäre, um das Zerkleinerungsgut im Trocknungsbehälter zu erwärmen und im Zerkleinerungsgut enthaltende Lösemittel zu verdampfen, wobei die Ist-Umgebungstemperatur im Trocknungsbehälter erfindungsgemäß derartig eingestellt wird, dass sich das Zerkleinerungsgut auf nicht mehr als 200°C erwärmt, und der Ist-Umgebungsdruck im Trocknungsbehälter derartig darauf abgestimmt eingestellt wird, dass bei der eingestellten Ist-Umgebungstemperatur sowohl niedrigsiedende Lösemittel als auch hochsiedende Lösemittel durch Verdampfen aus dem Zerkleinerungsgut abgetrennt werden, wobei die niedrigsiedenden Lösemittel und die hochsiedenden Lösemittel während der thermischen Behandlung des Zerkleinerungsgutes aus dem Trocknungsbehälter abgeführt werden, zumindest zeitweise gemeinsam und/oder zumindest zeitweise fraktioniert bzw. getrennt voneinander bzw. nacheinander aus demselben Trocknungsbehälter; und nachfolgend
- mechanisches Aufbereiten des thermisch behandelten bzw. getrockneten Zerkleinerungsgutes.

Vorteilhafterweise findet also während der thermischen (Haupt-)Behandlung eine gezielte Abstimmung des Ist-Umgebungsdruckes und der Ist-Umgebungstemperatur im Trocknungsbehälter derartig statt, dass die Ist-Umgebungstemperaturen im Trocknungsbehälter so niedrig gehalten werden können, dass ein Aufschmelzen von kunststoffhaltigen Substanzen im Zerkleinerungsgut vermieden werden kann aber gleichzeitig auch die hochsiedenden Lösemittel abgetrennt werden können, um für die nachfolgende Aufbereitung das Gefährdungspotential zu minimieren. Aufgrund der gezielten Einstellung des Ist-Umgebungsdruckes kann also in Temperaturbereichen gearbeitet werden, die den Aufbereitungsprozess in diesem Stadium der thermischen Behandlung und auch nachfolgend nicht negativ beeinträchtigen.

Im Gegensatz zu dem Vorgehen in WO 2021/018372 A1 ist gemäß der Erfindung eine gezielte und aufeinander abgestimmte Vorgabe und Einstellung eines Unterdruckes im Trocknungsbehälter während der thermischen Behandlung gerade vorgesehen, um in dem genannten Temperaturbereich von unter 200°C ein Abtrennen von allen Lösemittelanteilen im Elektrolyten, insbesondere auch den hochsiedenden Lösemitteln, sicherstellen zu können. Dem liegt der Gedanke zugrunde, dass sich die Verdampfungstemperaturen der hochsiedenden Lösemittel im Zerkleinerungsgut mit fallendem Ist-Umgebungsdruck ebenfalls verringern. Wird also gezielt ein geringerer Ist-Umgebungsdruck im Trocknungsbehälter eingestellt, können diese hochsiedenden Lösemittel auch bereits bei Ist-Umgebungstemperaturen von unter 200°C verdampfen. Vorzugsweise wird dabei davon ausgegangen, dass es ausreichend ist, die Ist-Umgebungstemperatur während der thermischen Behandlung im Trocknungsbehälter auf eine vorgegebene End-Umgebungstemperatur von zwischen 150°C und 200°C, vorzugsweise auf 150°C, zu bringen.

Da bei diesen Ist-Umgebungstemperaturen dann auch die niedrigsiedenden Lösemittel verdampfen, können alle abgetrennten bzw. verdampften Lösemittelanteile zumindest zeitweise gemeinsam und/oder zumindest zeitweise fraktioniert (je nach Umgebungsbedingungen) in nur einem thermischen (Haupt-)Behandlungsprozess aus demselben Trocknungsbehälter abgezogen werden und nachfolgend einem gesonderten Abgas-Behandlungsprozess zugeführt werden. Dabei ist unter einem hochsiedenden Lösemittel ein Lösemittel zu verstehen, das unter Atmosphärendruck bei einer Siedetemperatur von größer als 150°C, insbesondere größer als 240°C, verdampft, während ein niedrigsiedendes Lösemittel unter Atmosphärendruck bei einer Siedetemperatur von kleiner als 150°C, insbesondere kleiner als 130°C, verdampft.

Vorzugsweise ist dabei auch vorgesehen, dass das Zerkleinerungsgut während der thermischen Behandlung zwischen dem Abtrennen der niedrigsiedenden Lösemittel und dem Abtrennen der hochsiedenden Lösemittel, jeweils durch Verdampfen, nicht aus dem Trocknungsbehälter entnommen wird, um ein Abführen der niedrigsiedenden Lösemittel und der hochsiedenden Lösemittel aus demselben Trocknungsbehälter zu ermöglichen.

Insgesamt wird also der anlagentechnische bzw. konstruktive Aufwand für eine Aufbereitungs-Anlage verringert, da der Hauptteil der thermischen Behandlung in lediglich einem Trocknungsbehälter stattfindet, der auf diese thermische Behandlung zum Abführen aller noch vorhandenen niedrigsiedenden und hochsiedenden Lösemittelanteile ausgelegt ist und aus dem all diese verdampfenden Lösemittelanteile zeitweise gemeinsam und/oder zeitweise getrennt voneinander abgezogen werden können. Demnach ist keine getrennte Auslegung der Anlagen-Komponenten nötig und auch keine anlagentechnisch getrennte Abführung der einzelnen Lösemittelanteile und auch sonstiger entstehender Substanzen.

Die zumindest anteilige Abtrennung der niedrigsiedenden Lösemittel in der thermischen Vorbehandlung bereits während der Zerkleinerung ist dabei mit geringem Aufwand und ohne einen zusätzlichen Behälter möglich, wobei dies auch den Zerkleinerungsprozess in diesem Bereich der Anlage nicht beeinträchtigt, sondern das Gefährdungspotential eher minimiert. Weiterhin kann durch diese thermische Vorbehandlung die Effektivität des nachfolgenden Abtrennprozesses bzw. der nachfolgenden thermischen (Haupt-)Behandlung im Trocknungsbehälter, in dem dann auch weiterhin sowohl niedrigsiedende (verbleibend) und hochsiedende Lösemittelanteile verdampfen, erhöht werden. Insbesondere kann durch die thermische Vorbehandlung während des Zerkleinerungsprozesses erreicht werden, dass vorhandenes Wasser im Zerkleinerungsgut bereits frühzeitig verdampft und daher insbesondere den nachfolgenden thermischen Behandlungsprozess im Trocknungsbehälter weniger stark beeinträchtigt. Die in der thermischen Vorbehandlung abgetrennten niedrigsiedenden Lösemittel können zudem ebenfalls abgezogen und beispielsweise einer Abgasbehandlung zugeführt werden, beispielsweise demselben Abgas-Behandlungsprozess, dem auch die aus dem Trocknungsbehälter abgezogenen Lösemittel zugeführt werden.

Zudem ist auch der prozesstechnische Aufwand minimiert, da für den Hauptteil der thermischen Behandlung in nur einem gesonderten Trocknungsbehälter keine mehrfache Temperierung auf Temperaturen zwischen 150°C und 200°C (vollständiges Aufheizen und Abkühlen des Trocknungsbehälters bzw. des Zerkleinerungsgutes) und keine mehrfache Druckbehandlung (vollständiges Evakuieren und Belüften des Trocknungsbehälters) mit zwischenzeitlichem Umfüllen des Zerkleinerungsgutes nötig ist. Da der Zerkleinerungsraum ohnehin unter einem Unterdruck und unter Inertgas betrieben wird, ist der darüberhinausgehende prozesstechnische und konstruktive Aufwand zum Aufheizen des Zerkleinerungsgutes im Rahmen der thermischen Vorbehandlung darin eher gering. Das Aufheizen des Zerkleinerungsgutes wird in dem Fall beispielsweise dadurch erreicht, dass ein entsprechend temperierter Gasstrom in den Zerkleinerungsraum eingelassen wird und/oder dass die Umgebung anderweitig aufgewärmt wird. Zudem ist das nachfolgende Umfüllen des Zerkleinerungsgutes aus dem Zerkleinerungsraum in den Trocknungsbehälter ohnehin durchzuführen.

Daher wird durch die Erfindung sowohl der konstruktive als auch der prozesstechnische bzw. zeitliche Aufwand verringert. Insbesondere ist dabei auch vorgesehen, dass das Zerkleinerungsgut vor dem Überführen in den Trocknungsbehälter allenfalls in dem Zerkleinerungsraum zusätzlich thermisch vorbehandelt wird, und/oder das Zerkleinerungsgut vor dem mechanischen Aufbereiten in dem Trocknungsbehälter thermisch behandelt und in dem Zerkleinerungsraum thermisch vorbehandelt wird.

Vorzugsweise ist weiterhin vorgesehen, dass der Ist-Umgebungsdruck im Trocknungsbehälter während der thermischen Behandlung des Zerkleinerungsgutes auf einen End-Umgebungsdruck von zwischen 0,01mbar und 100mbar, insbesondere zwischen 30mbar und 100mbar, vorzugsweise 30mbar, verringert wird. Bei derartig niedrigen Ist-Umgebungsdrücken im Trocknungsbehälter können die Siedetemperaturen bzw. Verdampfungstemperaturen der im Zerkleinerungsgut noch vorhandenen Lösemittel auf einen derartig niedrigen Wert abgesenkt werden, dass eine Ist-Umgebungstemperatur von maximal 200°C, vorzugsweise in etwa 150°C, ausreichend ist, um diese aus dem Zerkleinerungsgut abzutrennen bzw. zu verdampfen.

Vorzugsweise kann ergänzend vorgesehen sein, dass der Ist-Umgebungsdruck im Trocknungsbehälter während der thermischen Behandlung des Zerkleinerungsgutes temporär auf einen vorgegeben Zwischen-Umgebungsdruck, der beispielsweise zwischen 500mbar und 1000mbar liegt, vorzugsweise bei 1000mbar, erhöht wird, vorzugsweise ausgehend von dem vorher eingestellten End-Umgebungsdruck von zwischen 0,01mbar und 100mbar, insbesondere zwischen 30mbar und 100mbar, und der Ist-Umgebungsdruck nach einer Wartezeit ausgehend von dem Zwischen-Umgebungsdruck wieder verringert wird, vorzugsweise auf den End-Umgebungsdruck. Währenddessen wird die Ist-Umgebungstemperatur im Trocknungsbehälter vorzugsweise nicht verändert, d.h. entsprechend hochgehalten.

Vorteilhafterweise werden durch das Druckerhöhen zwischenzeitlich wieder Gas- oder Luftmoleküle in den Trocknungsbehälter "eingefüllt", so dass sich das Zerkleinerungsgut im Trocknungsbehälter, das aufgrund der bei niedrigen Ist-Umgebungsdrücken gerade verringerten Anzahl an Gas- oder Luftmolekülen möglicherweise wieder leicht abgekühlt ist, während der Wartezeit wieder erwärmen kann. Das Druckerhöhen findet dabei durch Einlassen von beispielsweise Stickstoff oder einem anderen Inertgas statt, um den Trocknungsprozess nicht zu beeinträchtigen. Wird nachfolgend der Ist-Umgebungsdruck wieder verringert, kann aufgrund des Absenkens der Siedetemperaturen ein Abtrennen bzw. Verdampfen der Lösemittelanteile erfolgen. Auf diese Weise kann also sichergestellt werden, dass während der gesamten thermischen Behandlung im Trocknungsbehälter die jeweiligen Lösemittel verdampfen.

Um dies noch weiter zu optimieren, kann vorzugsweise vorgesehen sein, dass dieses temporäre Erhöhen des Ist-Umgebungsdruckes im Trocknungsbehälter auf den Zwischen-Umgebungsdruck, beispielsweise durch Einlassen von Stickstoff oder einem anderen Inertgas, und das anschließende Verringern des Ist-Umgebungsdruckes nach der Wartezeit während der thermischen Behandlung des Zerkleinerungsgutes im Trocknungsbehälter mehrfach durchgeführt wird. Demnach wird also der Verdampfungsprozess quasi gepulst immer wieder "angeregt" bzw. es wird verhindert, dass sich das Zerkleinerungsgut derartig abkühlt, dass die Siedetemperaturen bzw. Verdampfungstemperaturen der hochsiedenden Lösemittel nicht mehr erreicht werden. Auf diese Weise kann ein durchgängiges Abtrennen bzw. Verdampfen der Lösemittel nahezu sichergestellt werden, so dass nach Abschluss des thermischen Behandlungsprozesses im Trocknungsbehälter mit hoher Wahrscheinlichkeit davon auszugehen ist, dass von dem Zerkleinerungsgut ein nur noch geringes chemisches Gefährdungspotential ausgeht, da die Lösemittel idealerweise vollständig verdampft sind.

Vorzugsweise ist weiterhin vorgesehen, dass der Ist-Umgebungsdruck im Trocknungsbehälter während des Erhöhens der Ist-Umgebungstemperatur im Trocknungsbehälter erst dann verringert wird, wenn die Ist-Umgebungstemperatur die vorgegebene End-Umgebungstemperatur, beispielsweise zwischen 150°C und 200°C, erreicht hat, wobei der Ist-Umgebungsdruck im Trocknungsbehälter bis dahin auf einem Atmosphärendruck gehalten wird, also insbesondere auf in etwa 1000mbar, vorzugsweise unter Inertgasatmosphäre. Dem liegt der Gedanke zugrunde, dass ein Energie- bzw. Wärmeübertrag auf das Zerkleinerungsgut träger wird, je weniger Gas- bzw. Luftmoleküle sich im Trocknungsbehälter befinden. Wird der Ist-Umgebungsdruck aber erst dann reduziert bzw. die Gas- und Luftmoleküle erst dann aus dem Trocknungsbehälter abgezogen, wenn das Zerkleinerungsgut bereits aufgeheizt ist, kann eine schnellere Erwärmung des Zerkleinerungsgutes erfolgen, was den thermischen Behandlungsprozess im Trocknungsbehälter insgesamt effizienter macht.

Alternativ dazu kann aber auch vorgesehen sein, dass der Ist-Umgebungsdruck im Trocknungsbehälter mit einem vorgegebenen bzw. vorgebbaren Druckgradienten bereits dann verringert wird, während die Ist-Umgebungstemperatur im Trocknungsbehälter mit einem Temperaturgradienten auf die vorgegebene End-Umgebungstemperatur gebracht wird, wobei der Druckgradient in Relation zum Temperaturgradient vorzugsweise geringer ist. Der Ist-Umgebungsdruck wird also beim Erhöhen der Ist-Umgebungstemperatur nur langsam (gegenüber dem Anstieg der Ist-Umgebungstemperatur) abgesenkt, so dass zu Beginn noch genügend Gas- bzw. Luftmoleküle im Trocknungsbehälter zur Verfügung stehen, um das Zerkleinerungsgut aufzuwärmen.

Vorzugsweise ist weiterhin vorgesehen, dass die thermische Behandlung des Zerkleinerungsgutes im Trocknungsbehälter diskontinuierlich erfolgt, wobei das thermisch zu behandelnden Zerkleinerungsgut dazu in den Trocknungsbehälter überführt wird und der Trocknungsbehälter anschließend vakuumdicht verschlossen wird, bis das thermisch behandelte Zerkleinerungsgut der mechanischen Aufbereitung zugeführt wird.

Vorzugsweise ist weiterhin vorgesehen, dass das in den Trocknungsbehälter überführte Zerkleinerungsgut vor und/oder während und/oder nach der thermischen Behandlung durchmischt und/oder aufgelockert wird, vorzugsweise durch eine Mischeinrichtung. Dadurch wird der Vorteil erreicht, dass sich während der thermischen Behandlung keine Agglomerate bilden und die Ist-Umgebungstemperatur auf das gesamte Zerkleinerungsgut gleichmäßig einwirken kann. Weiterhin können die freien verdampften Lösemittelanteile optimal ins Prozessgas übergehen und nicht im Material eingeschlossen bleiben, was das gemeinsame oder fraktionierte Abziehen der Lösemittelanteile erleichtert. Vorzugsweise ist dabei weiterhin vorgesehen, dass die Mischeinrichtung beheizt wird, um Temperaturbrücken in dem Trocknungsbehälter während des thermischen Behandlungsprozesses zu vermeiden

Vorzugsweise ist weiterhin vorgesehen, dass vor und/oder während der thermischen Behandlung des Zerkleinerungsgutes ein Inertgas in den Trocknungsbehälter eingebracht wird. Dadurch kann der thermische Behandlungsprozess kontrollierter erfolgen und weitere Gefahren während der thermischen Behandlung im Trocknungsbehälter minimiert werden.

Erfindungsgemäß ist weiterhin eine Aufbereitungs-Anlage vorgesehen, insbesondere zur Durchführung des erfindungsgemäßen Verfahrens, wobei die Aufbereitungs-Anlage mindestens aufweist:
- einen Zerkleinerungs-Bereich mit einem Zerkleinerungsraum zum Verarbeiten von bereitgestellten, ggf. vorbereiten, zu recycelnden Batterien zu Zerkleinerungsgut und auch zur thermischen Vorbehandlung;
- einen Trocknungs-Bereich zum thermischen (Haupt-)Behandeln des Zerkleinerungsgutes, mit
   -- einem Trocknungsbehälter zum Aufnehmen des Zerkleinerungsgutes,
   -- mindestens einer zumindest teilweise im oder am Trocknungsbehälter angeordneten Heizung zum Erhöhen der Ist-Umgebungstemperatur im Trocknungsbehälter, und
   -- einer Vakuum-Pumpe, die über entsprechende Druckleitungen mit dem Trocknungsbehälter strömungsverbunden ist, zum Verringern eines Ist-Umgebungsdruckes im Trocknungsbehälter;
- einen mechanischen Verarbeitungs-Bereich zum nachfolgenden mechanischen Aufbereiten des thermisch behandelten Zerkleinerungsgutes; und
- eine Steuereinrichtung, die ausgebildet ist, die mindestens eine Heizung und die Vakuum-Pumpe in dem Trocknungs-Bereich derartig anzusteuern, dass sich im Trocknungsbehälter befindliches Zerkleinerungsgut erwärmt und im Zerkleinerungsgut enthaltende Lösemittel verdampfen können, wobei die Steuereinrichtung erfindungsgemäß ferner ausgebildet ist,
- die Ist-Umgebungstemperatur im Trocknungsbehälter derartig einzustellen, dass sich das darin befindliche Zerkleinerungsgut auf nicht mehr als 200°C erwärmt, und
- den Ist-Umgebungsdruck im Trocknungsbehälter derartig einzustellen, dass bei der eingestellten Ist-Umgebungstemperatur sowohl niedrigsiedende Lösemittel als auch hochsiedende Lösemittel durch Verdampfen aus dem Zerkleinerungsgut abgetrennt werden können, so dass die niedrigsiedenden Lösemittel und die hochsiedenden Lösemittel während der thermischen Behandlung des Zerkleinerungsgutes aus dem Trocknungsbehälter abführbar sind, zumindest zeitweise gemeinsam und/oder zumindest zeitweise fraktioniert bzw. nacheinander aber aus demselben Trocknungsbehälter.

Vorzugsweise ist weiterhin vorgesehen, dass am Trocknungsbehälter eine Einlass-Öffnung zum Einfüllen des Zerkleinerungsgutes und eine Auslass-Öffnung zum Entnehmen des thermisch behandelten Zerkleinerungsgutes vorgesehen ist, wobei die Auslass-Öffnung unterseitig bzw. an einer Unterseite des Trocknungsbehälters angeordnet ist, so dass thermisch behandeltes Zerkleinerungsgut in vertikaler Richtung aus dem Trocknungsbehälter entnommen werden kann. Auf diese Weise kann eine vollständige Entleerung des Trocknungsbehälters vereinfacht werden, da sich das Zerkleinerungsgut durch die Schwerkraft und/oder einem zusätzlichen Überdruck im Trocknungsbehälter nach unten zur Auslass-Öffnung bewegt.

Vorzugsweise ist weiterhin vorgesehen, dass im Trocknungsbehälter eine Mischeinrichtung angeordnet ist zum Durchmischen und/oder Auflockern des Zerkleinerungsgutes während der thermischen Behandlung. Dadurch wird der Vorteil erreicht, dass sich während der thermischen Behandlung im Trocknungsbehälter keine Agglomerate bilden und die Ist-Umgebungstemperatur auf das gesamte Zerkleinerungsgut gleichmäßig einwirken kann. Weiterhin können die freien verdampften Lösemittelanteile optimal ins Prozessgas übergehen und nicht im Material eingeschlossen bleiben, was das gemeinsame Abziehen der Lösemittelanteile erleichtert. Vorzugsweise ist dabei weiterhin vorgesehen, dass die Mischeinrichtung beheizbar ausgeführt ist, um Temperaturbrücken im thermischen Behandlungsprozess in dem Trocknungsbehälter zu vermeiden.

Vorzugsweise ist weiterhin vorgesehen, dass der Trocknungsbehälter derartig mit einer Abgas-Behandlungseinrichtung strömungsverbunden ist, dass die bei der thermischen Behandlung des Zerkleinerungsgutes abgetrennten niedrigsiedenden Lösemittel und hochsiedenden Lösemittel während der thermischen Behandlung des Zerkleinerungsgutes zumindest zeitweise gemeinsam und/oder zumindest zeitweise fraktioniert aus demselben Trocknungsbehälter in die Abgas-Behandlungseinrichtung überführbar sind. Demnach werden die zeitweise gleichzeitig bzw. zeitweise getrennt voneinander im selben Trocknungsbehälter verdampfenden Lösemittel über dieselbe Strömungsverbindung abgeführt, ohne dass vorher eine prozesstechnische Trennung erfolgt.

Vorzugsweise ist weiterhin vorgesehen, dass zwischen dem Trocknungsbehälter und der damit strömungsverbundenen Vakuum-Pumpe ein Stellventil angeordnet ist, wobei das Stellventil derartig durch die Steuereinrichtung angesteuert werden kann, dass sich der Ist-Umgebungsdruck im Trocknungsbehälter an einen vorgegebenen Soll-Umgebungsdruck annähert. Auf diese Weise kann eine gut kontrollierbare Druckeinstellung erfolgen, beispielsweise auch im Rahmen eine Regelung.

Die Erfindung wird nachstehend anhand eines Ausführungsbeispiels näher erläutert. Es zeigen:
- Fig. 1: eine schematische Ansicht einer erfindungsgemäßen Aufbereitungs-Anlage; und
- Fig. 2: ein Flussdiagramm eines Verfahrens zum Aufbereiten von zu recycelnden Batterien.

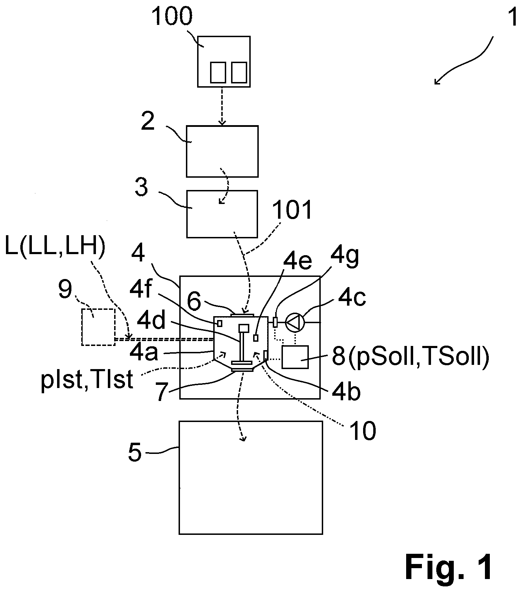

In Fig. 1 ist stark schematisiert eine Aufbereitungs-Anlage 1 zum Aufbereiten von zu recycelnden Batterien 100, insbesondere Li-Ionen-Batterien, dargestellt. Die Aufbereitungs-Anlage 1 ist unterteilt in einen Vorbereitungs-Bereich 2, einen Zerkleinerungs-Bereich 3, einen Trocknungs-Bereich 4 und einen mechanischen Verarbeitungs-Bereich 5, wobei die zu recycelnden Batterien 100 die Aufbereitungs-Anordnung 1 in der genannten bzw. dargestellten Reihenfolge durchlaufen.

In dem Vorbereitungs-Bereich 2 werden die zu recycelnden Batterien 100 für die Zerkleinerung und die mechanische Verarbeitung vorbereitet, d.h. beispielsweise entladen und/oder demontiert und/oder weitere vorbereitenden Schritte durchgeführt. Insbesondere werden die zu recycelnden Batterien 100, wenn diese beispielsweise in Form von Batterie-Modulen oder Batterie-Stacks angeliefert bzw. bereitgestellt werden, in dem Vorbereitungs-Bereich 2 auf ein Zelllevel gebracht.

In dem nachfolgenden Zerkleinerungs-Bereich 3 werden die vorbereiteten Batterien 100 in einem Zerkleinerungsraum 3a mechanisch zerkleinert, insbesondere in einer inerten Atmosphäre und unter leichtem Unterdruck, so dass nachfolgend ein Zerkleinerungsgut 101 entsteht. Dies erfolgt beispielsweise durch Scheren bzw. Zerhäckseln in einem Shredder oder durch Zerschlagen oder Zerdrücken oder durch eine Schneid-, Scher-, Reißbeanspruchung in Verbindung mit Biegung und Torsion z.B. in einem Granulator. Der Zerkleinerungsraum 3a wird dabei auf eine Zerkleinerungstemperatur TZ von beispielsweise <100°C aufgeheizt, um in einer thermischen Vorbehandlung vor allem Wasser und ggf. auch niedrigsiedende Lösemittel LS in dem entstehenden Zerkleinerungsgut 101 und/oder den vorbereiteten Batterien 100 zumindest anteilig zu verdampfen, was die Effektivität des nachfolgenden Trocknungsprozesses erhöht.

**In** dem sich daran anschließenden Trocknungs-Bereich 4 befindet sich ein Trocknungsbehälter 4a, wobei in dem oder an dem Trocknungsbehälter 4a mindestens eine Heizung 4b (zumindest teilweise) angeordnet ist und der Trocknungsbehälter 4a mit einer Vakuum-Pumpe 4c strömungsverbunden ist. Die mindestens eine Heizung 4b kann in Abhängigkeit einer von einer Steuereinrichtung 8 vorgegebenen Soll-Umgebungstemperatur TSoll derartig angesteuert werden, dass sich eine Ist-Umgebungstemperatur Tist im Trocknungsbehälter 4a idealerweise an die vorgegebene Soll-Umgebungstemperatur Tsoll annähert. Dies kann beispielsweise im Rahmen einer Temperaturregelung erfolgen, wobei dazu im Trocknungsbehälter 4a ein Temperatur-Sensor 4e angeordnet ist, der die aktuelle Ist-Umgebungstemperatur Tist im Trocknungsbehälter 4a erfassen kann.

Die mindestens eine Vakuum-Pumpe 4c kann in Abhängigkeit eines ebenfalls von der Steuereinrichtung 8 vorgegebenen Soll-Umgebungsdruckes pSoll derartig angesteuert werden, dass sich ein Ist-Umgebungsdruck plst im Trocknungsbehälter 4a an den vorgegebenen Soll-Umgebungsdruck pSoll annähert. Dies kann beispielsweise im Rahmen einer Druckregelung erfolgen, wobei dazu im Trocknungsbehälter 4a ein Druck-Sensor 4f angeordnet ist, der den aktuellen Ist-Umgebungsdruck plst im Trocknungsbehälter 4a erfassen kann. Es sind aber auch andere Methoden zur Einstellung des vorgegebenen Soll-Umgebungsdruckes pSoll denkbar.

Ferner kann in einer Ausführungsform zwischen dem Trocknungsbehälter 4a und der Vakuum-Pumpe 4c ein von der Steuereinrichtung 8 ansteuerbares Stellventil 4g vorgesehen sein, über das die zwischen der Vakuum-Pumpe 4c und dem Trocknungsbehälter 4a ausgebildete Strömungsverbindung situationsbedingt beeinflusst werden kann.

Das aus dem Zerkleinerungs-Bereich 3 abgeführte Zerkleinerungsgut 101, das thermisch vorbehandelt ist, kann dem Trocknungsbehälter 4a über eine Einlass-Öffnung 6 zugeführt werden und nach einem Trocknungsprozess (thermische Haupt-Behandlung), in dem das Zerkleinerungsgut 101 thermisch behandelt wird, über eine Auslass-Öffnung 7 wieder entnommen werden. Die Auslass-Öffnung 7 ist dabei vorzugsweise unterseitig des Trocknungsbehälters 4a angeordnet, so dass das thermisch behandelte Zerkleinerungsgut 101 nahezu vollständig aus dem Trocknungsbehälter 4a entnommen werden kann, da dieses durch die Gewichtskraft und/oder einem zusätzlichen Überdruck im Trocknungsbehälter 4a vertikal nach unten fällt. Der Trocknungsprozess bzw. thermische (Haupt-)Behandlungsprozess selbst erfolgt durch eine entsprechend gewählte Einstellung der Ist-Umgebungstemperatur Tist bzw. des Ist-Umgebungsdruckes plst im Trocknungsbehälter 4a, so dass es wie nachfolgend noch näher erläutert in demselben Trocknungsbehälter 4a zu einer thermischen Behandlung des Zerkleinerungsgutes 101 unter Abtrennung von unterschiedlichen Lösemitteln L kommt.

Über eine im Trocknungsbehälter 4a angeordnete Mischeinrichtung 4d mit einem entsprechenden Mischwerkzeug kann das Zerkleinerungsgut 101 im Trocknungsbehälter 4a zusätzlich durchmischt werden, wobei auch die Mischeinrichtung 4d entsprechend aufgeheizt wird, so dass eine Bildung von Temperaturbrücken während der thermischen Behandlung im Trocknungsbehälter 4a vermieden wird. Die Mischeinrichtung 4d sorgt dafür, dass das Zerkleinerungsgut 101 ständig aufgelockert wird und sich keine Agglomerate bilden. Dadurch kann nach der thermischen Behandlung über die Auslass-Öffnung 7 ein idealerweise agglomeratfreies, rieselfähiges Zerkleinerungsgut 101 mit gleichmäßig hohem Durchtrocknungsgrad entnommen werden. Nachfolgend kann dieses gut durchtrocknete Zerkleinerungsgut 101 in den mechanischen Verarbeitungs-Bereich 5 gebracht werden, in dem eine mechanische Aufbereitung erfolgt.

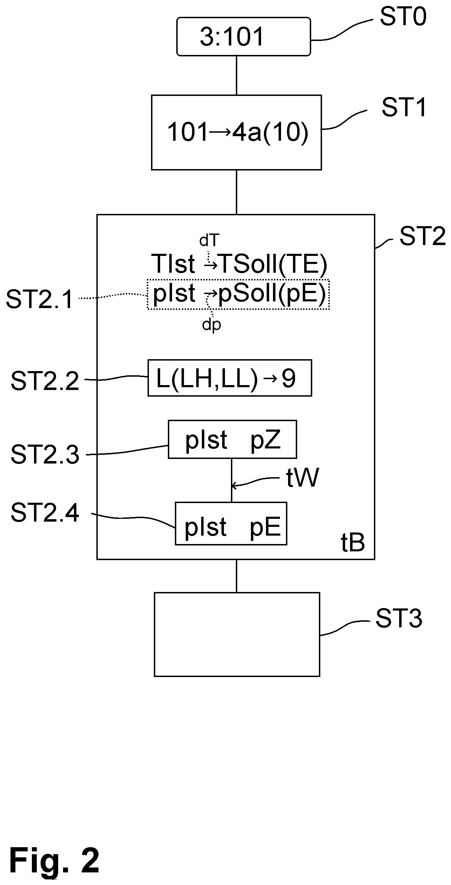

Um eine solche mechanische Aufbereitung mit einem Zerkleinerungsgut 101 durchführen zu können, von dem nur ein geringes (chemisches) Gefährdungspotential ausgeht, findet der Trocknungsprozess bzw. der thermische (Haupt-)Behandlungsprozess unter Verwendung der beschriebenen Anlagenkomponenten wie beispielhaft in Fig. 2 dargestellt statt.

In einem anfänglichen Schritt ST0 wird ein Zerkleinerungsgut 101 bereitgestellt, indem die zu recycelnden Batterien 100 wie oben beschrieben (vorbereitet oder unvorbereitet) in dem Zerkleinerungs-Bereich 3 zu Zerkleinerungsgut 101 verarbeitet und nachfolgend thermisch vorbehandelt (T < 100°C) werden. In einem ersten Schritt ST1 wird das bereitgestellte Zerkleinerungsgut 101 durch die Einlass-Öffnung 6 in den Trocknungsbehälter 4a eingefüllt und der Trocknungsbehälter 4a anschließend vakuumdicht verschlossen, mit Stickstoff bzw. Inertgas 10 gespült, um bei der nachfolgenden thermischen (Haupt-)Behandlung, die diskontinuierlich erfolgt, den Ist-Umgebungsdruck plst im Trocknungsbehälter 4a unter Inertgasatmosphäre sicher halten zu können.

In einem zweiten Schritt ST2 wird von der Steuereinrichtung 8, die den Trocknungsprozess bzw. den thermischen Behandlungsprozess im Trocknungsbehälter 4a steuert, eine Soll-Umgebungstemperatur Tsoll vorgegeben und die mindestens eine Heizung 4b in Abhängigkeit davon angesteuert. Als Soll-Umgebungstemperatur Tsoll wird beispielsweise eine End-Temperatur TE von zwischen 150°C und 200°C, vorzugsweise 150°C, vorgegeben. Ferner gibt die Steuereinrichtung 8 einen Soll-Umgebungsdruck pSoll vor und steuert die Vakuum-Pumpe 4c und/oder das Stellventil 4g (falls vorhanden) in Abhängigkeit davon an. Als Soll-Umgebungsdruck pSoll wird beispielsweise ein End-Druck pE von zwischen 0,01mbar und 100mbar, insbesondere zwischen 30mbar und 100mbar, vorzugsweise 30mbar, vorgeben (abhängig von der eingesetzten Vakuum-Pumpe 4c).

Die Ansteuerung der mindestens einen Heizung 4b, der Vakuum-Pumpe 4c und/oder des Stellventils 4g (falls vorhanden) kann dabei in unterschiedlichen Ausführungsformen erfolgen, die nachfolgend beschrieben werden:
Gemäß einer ersten Ausführungsform werden die mindestens eine Heizung 4b und die Vakuum-Pumpe 4c zeitgleich oder kurz nacheinander angesteuert, während eine Strömungsverbindung zwischen der Vakuum-Pumpe 4c und dem Trocknungsbehälter 4a ausgebildet ist, um sich an die vorgegebenen Soll-Werte (Tsoll, pSoll) anzunähern. Dadurch erwärmt sich der Trocknungsbehälter 4a bei fallendem Ist-Umgebungsdruck plst und es kommt zu einem gewissen Energie- bzw. Wärmeübertrag auf das Zerkleinerungsgut 101, so dass sich auch dieses erwärmt, idealerweise auf die vorgegebene Soll-Umgebungstemperatur Tsoll.

Gemäß einer zweiten Ausführungsform ist vorgesehen, dass die mindestens eine Heizung 4b von der Steuereinrichtung 8 angesteuert wird, während die Vakuum-Pumpe 4c noch ausgeschaltet bleibt und/oder die Strömungsverbindung zwischen dem Trocknungsbehälter 4a und der Vakuum-Pumpe 4c über das Stellventil 4g unterbrochen ist und demnach noch kein Unterdruck in dem Trocknungsbehälter 4a erzeugt wird. Die Ist-Umgebungstemperatur Tist im Trocknungsbehälter 4a wird also erhöht, vorzugsweise mit einem hohen Temperaturgradienten dT, während der Ist-Umgebungsdruck plst konstant bleibt, insbesondere auf Atmosphärendruck (ca. 1000mbar) unter Inertgasatmosphäre.

Nach Ablauf einer bestimmten Zeit und/oder nachdem ein bestimmter Anstieg der Ist-Umgebungstemperatut Tist im Trocknungsbehälter 4a über den Temperatur-Sensor 4e festgestellt wurde, sorgt die Steuereinrichtung 8 in einem ersten Zwischenschritt ST2.1 durch eine entsprechende Ansteuerung der Vakuum-Pumpe 4c und/oder des Stellventils 4g (falls vorhanden) dafür, dass der Ist-Umgebungsdruck plst im Trocknungsbehälter 4a auf den Soll-Umgebungsdruck pSoll abgesenkt wird, wodurch sich der gewünschte Unterdruck im Trocknungsbehälter 4a einstellt.

Durch dieses Vorgehen kann der Energie- bzw. Wärmeübertrag auf das Zerkleinerungsgut 101 in dieser zweiten Ausführungsform optimiert werden: Eine Reduzierung des Ist-Umgebungsdruckes plst bewirkt nämlich, dass der Energie- bzw. Wärmeübertrag auf das Zerkleinerungsgut 101 immer träger wird, da die Anzahl an Gas- oder Luftmolekülen in dem Trocknungsbehälter 4a immer weiter abnimmt. Wird der Ist-Umgebungsdruck plst jedoch erst dann reduziert, wenn das Zerkleinerungsgut 101 bereits aufgewärmt ist, kann das Zerkleinerungsgut 101 innerhalb einer kürzeren Zeit auf die gewünschte Soll-Umgebungstemperatur Tsoll gebracht werden.

Statt die Vakuum-Pumpe 4c zunächst noch ausgeschaltet zu lassen und/oder die Strömungsverbindung zwischen dem Trocknungsbehälter 4a und der Vakuum-Pumpe 4c über das Stellventil 4g (falls vorhanden) komplett zu unterbrechen, während die Ist-Umgebungstemperatur Tist im Trocknungsbehälter 4a mit einem entsprechend hohen Temperaturgradienten dT erhöht wird, kann auch vorgesehen sein, dass der Ist-Umgebungsdruck plst gleichzeitig dazu (oder geringfügig zeitversetzt) mit einem geringen Druckgradienten dp (gering in Relation zum Temperaturgradienten dT) in Richtung des Soll-Umgebungsdruckes pSoll abgesenkt wird. Die erste Ausführungsform wird also mit der zweiten Ausführungsform in dem Sinne kombiniert, dass sich der Ist-Umgebungsdruck plst bei schnell ansteigender Ist-Umgebungstemperatur Tist nur sehr langsam verringert, so dass zu Beginn des thermischen Behandlungsprozesses im Trocknungsbehälter 4a bei noch hohen Ist-Umgebungsdrücken plst (geringer Unterdruck) ein guter Energie- bzw. Wärmeübertrag von der mindestens einen Heizung 4b auf das im Trocknungsbehälter 4a befindliche Zerkleinerungsgut 101 gewährleistet werden kann. Erst dann, wenn das Zerkleinerungsgut 101 bereits hinreichend erwärmt ist, wird dann der vorgegebenen Soll-Umgebungsdruck pSoll erreicht.

Ein geringer Druckgradient dp kann dabei beispielsweise durch ein Stellventil 4g eingestellt werden, das auch Zwischenstellungen ermöglicht, beispielsweise ein Proportionalventil oder ein Drosselventil. Die Vakuum-Pumpe 4c kann aber auch bei vollständig geöffnetem Stellventil 4g (oder ohne ein Stellventil 4g in der Strömungsverbindung) mit entsprechend geringerer Leistung betrieben werden, um weniger stark am Trocknungsbehälter 4a zu pumpen und dadurch einen geringen Druckgradienten dp zu erzielen.

In allen genannten Ausführungsformen kann der Energie- bzw. Wärmeübertrag auf das Zerkleinerungsgut 101 im Trocknungsbehälter 4a optimiert werden, indem während des Trocknungsprozesses bzw. des thermischen Behandlungsprozesses die Mischeinrichtung 4d von der Steuereinrichtung 8 angesteuert wird. Dadurch wird das Zerkleinerungsgut 101 beim Aufwärmen durchmischt bzw. aufgelockert, so dass eine gleichmäßige Durchtrocknung bzw. thermische Behandlung ohne Agglomeratbildung erfolgen kann.

Die Steuereinrichtung 8 gibt sowohl den Soll-Umgebungsdruck pSoll als auch die Soll-Umgebungstemperatur Tsoll gezielt und aufeinander abgestimmt vor, so dass in dem beschriebenen Trocknungsprozess bzw. thermischen Behandlungsprozess im Trocknungsbehälter 4a eine gezielte Abtrennung bestimmter Lösemittel L aus dem Zerkleinerungsgut 101 erfolgen kann. Dem liegt der Gedanke zugrunde, dass in einem Elektrolyten als Bestandteil der jeweils zu recycelnden Batterie 100 verschiedene Arten von Lösemittel L enthalten sind, die sich auch nach der Zerkleinerung noch im Zerkleinerungsgut 101 befinden. Insbesondere enthält der Elektrolyt dabei hochsiedende Lösemittel **LH,** beispielsweise Ethylencarbonat (EC), Propylencarbonat (PC), usw., sowie niedrigsiedende Lösemittel **LL,** beispielsweise Dimethylcarbonat (DMC), Ethylmethylcarbonat (EMC), Diethylcarbonat (DEC), usw., die sich jeweils durch ihre Siedetemperaturen voneinander unterscheiden. Während die angegebenen hochsiedenden Lösemittel **LH** unter Atmosphärendruck bei Ist-Umgebungstemperaturen Tist von 240°C oder höher verdampfen, erfolgt eine Verdampfung der angegebenen niedrigsiedenden Lösemittel **LL** unter Atmosphärendruck bei Ist-Umgebungstemperaturen Tist von 130°C oder weniger.

Beide Lösemittelanteile (LL, LH) würden für ein erhöhtes chemisches Gefährdungspotential bei der nachfolgenden mechanischen Aufbereitung sorgen, so dass diese vorher abzutrennen sind, was in dem beschriebenen Trocknungsprozess bzw. thermischen (Haupt-)Behandlungsprozess im Trocknungsbehälter 4a geschieht. Da jedoch bei Ist-Umgebungstemperaturen Tist von oberhalb von 240°C, die zum Verdampfen der hochsiedenden Lösemittel **LH** nötig sind, die Kunststoffanteile im Zerkleinerungsgut 101 an ihre Fließgrenze gebracht werden und damit bei langer thermischer Behandlungszeit beginnen zu schmelzen, sollen derartig hohe Ist-Umgebungstemperaturen Tist im Trocknungsprozess bzw. thermischen Behandlungsprozess im Trocknungsbehälter 4a vermieden werden. Wie oben beschrieben werden daher von der Steuereinrichtung 8 gezielt Soll-Umgebungstemperaturen Tsoll von zwischen 150°C und 200°C vorgegeben, bei denen die Kunststoffanteile ihre Fließgrenze normalerweise nicht erreichen.

Damit auch die hochsiedenden Lösemittel **LH** bereits bei diesen Soll-Umgebungstemperaturen Tsoll von zwischen 150°C und 200°C verdampfen können, wird gleichzeitig der Ist-Umgebungsdruck plst reduziert. Dabei wird ausgenutzt, dass sich die Siedetemperaturen der hochsiedenden Lösemittel **LH** mit fallendem Ist-Umgebungsdruck plst verringern. Der Ist-Umgebungsdruck plst kann dabei so stark reduziert werden, vorzugsweise auf unter 100mbar, insbesondere auf ca. 30mbar, dass die hochsiedenden Lösemittel **LH** bereits bei Ist-Umgebungstemperaturen Tist von unter 200°C, beispielsweise bei 150°C, verdampfen.

Da die Siedetemperaturen der niedrigsiedenden Lösemittel **LL** bereits bei Atmosphärendruck geringer sind als diese vorgegebenen 150°C bis 200°C, verdampfen diese ebenfalls mit. Folglich ist bei der gezielten Vorgabe der Soll-Umgebungstemperatur Tsoll und des Soll-Umgebungsdruckes pSoll durch die Steuereinrichtung 8 hauptsächlich dasjenige Lösemittel im Elektrolyten zu betrachten, das am schwersten verdampflich ist, da alle leichter verdampflichen Lösemittel dann automatisch mitverdampfen. Durch diese gezielte und abgestimmte Vorgabe von Soll-Umgebungsdruck pSoll und Soll-Umgebungstemperatur Tsoll und die nachfolgende Einstellung im Trocknungsbehälter 4a kann also erreicht werden, dass alle (relevanten) flüssigen Lösemittelanteile (LL, LH) im Zerkleinerungsgut 101 ihren Aggregatzustand von flüssig zu gasförmig verändern, ohne dass gleichzeitig feste Kunststoffanteile im Zerkleinerungsgut 101 an ihre Fließgrenze gebracht werden.

Die dann zumindest zeitweise gemeinsam und/oder zumindest zeitweise nacheinander verdampfenden niedrigsiedenden und hochsiedenden Lösemittel **LL, LH** können in einem zweiten Zwischenschritt ST2.2 zeitweise in Kombination miteinander und/oder zeitweise fraktioniert aus demselben Trocknungsbehälter 4a über dieselbe Strömungsverbindung abgezogen und einer mit dem Trocknungsbehälter 4a strömungsverbundenen Abgasbehandlungs-Einrichtung 9 zugeführt werden. In dieser kann anschließend eine Abgasbehandlung erfolgen.

Um den gesamten Trocknungsprozess bzw. thermischen Behandlungsprozess im Trocknungsbehälter 4a weiter zu optimieren, kann ergänzend vorgesehen sein, dass der Ist-Umgebungsdruck plst im Trocknungsbehälter 4a zwischenzeitlich durch eine entsprechend geänderte Ansteuerung der Vakuum-Pumpe 4c und/oder des Stellventils 4g (falls vorhanden) in einem dritten Zwischenschritt ST2.3 wieder erhöht wird, wobei dazu beispielsweise von der Steuereinrichtung 8 temporär als Soll-Umgebungsdruck pSoll ein Zwischen-Umgebungsdruck pZ von beispielsweise 500mbar oder höher vorgegeben wird, bei weiterhin gleichbleibender Soll-Umgebungstemperatur TSoll von zwischen 150°C und 200°C, vorzugsweise 150°C. Das Druckerhöhen findet dabei durch Einlassen von beispielsweise Stickstoff oder einem anderen Inertgas statt, um den thermischen Behandlungsprozess im Trocknungsbehälter 4a nicht zu beeinträchtigen.

Durch eine solche Druckerhöhung wird die Anzahl an Gasmolekülen im Trocknungsbehälter 4a zeitweise wieder erhöht, so dass der Energie- bzw. Wärmeübertrag von der mindestens einen Heizung 4b auf das Zerkleinerungsgut 101 kurzzeitig verbessert wird und sich das zwischenzeitlich möglicherweise leicht abgekühlte Zerkleinerungsgut 101 wieder erwärmen kann. Anschließend kann nach einer Wartezeit tW in einem vierten Zwischenschritt ST2.4 als Soll-Umgebungsdruck pSoll wieder der End-Umgebungsdruck pE von zwischen 0,01mbar und 100mbar, insbesondere zwischen 30mbar und 100mbar, vorzugsweise 30mbar, vorgegeben und eingestellt werden, um die Siedetemperaturen aller Lösemittelanteile (LL, LH) im wieder aufgewärmten Zerkleinerungsgut 101 auf oder unter die eingestellte Soll-Umgebungstemperatur TSoll zu senken.

Der dritte und vierte Zwischenschritt ST2.3, ST2.4 können während des Trocknungsprozesses bzw. des thermischen Behandlungsprozesses im Trocknungsbehälter 4a mehrfach wiederholt werden, wobei durch diese gepulste Veränderung des Ist-Umgebungsdruckes plst das Verdampfen der jeweiligen Lösemittel L quasi wieder "angeregt" wird und dadurch ein zuverlässiges Abtrennen aller Lösemittelanteile (LL, LH) im Zerkleinerungsgut 101 ermöglicht wird.

Der beschriebenen Trocknungsprozess im Trocknungsbehälter 4a findet dabei für eine festgelegte Behandlungszeit tB statt, die abhängig davon sein kann, welche Ausführungsform bzw. welche Zwischenschritte ST2.1, ST2.2, ST2.3, ST2.4 durchgeführt werden. Die Behandlungszeit tB wird dabei derartig festgelegt, dass unter den gegebenen Bedingungen bei den jeweils vorliegenden Ist-Umgebungstemperaturen Tlst und Ist-Umgebungsdrücken plst davon auszugehen ist, dass alle im Zerkleinerungsgut 101 enthaltenen Lösemittel L (LL, LH) die Möglichkeit haben, möglichst vollständig zu verdampfen. Ist eine thermische Vorbehandlung im Zerkleinerungsraum 3a vorgesehen, kann die Behandlungszeit tB unter Umständen verringert werden.

Nachdem der Trocknungsprozess bzw. der thermische Behandlungsprozess im Trocknungsbehälter 4a nach der festgelegten Behandlungszeit tB beendet ist, wird der Trocknungsbehälter 4a in einem dritten Schritt ST3 wieder auf Atmosphärendruck gebracht und das getrocknete bzw. thermisch behandelte und lösemittelbefreite Zerkleinerungsgut 101 aus der Auslass-Öffnung 7 entnommen und in den mechanischen Verarbeitungs-Bereich 5 zur mechanischen Aufbereitung überführt.

### Bezugszeichenliste

- 1: Aufbereitungs-Anlage
- 2: Vorbereitungs-Bereich
- 3: Zerkleinerungs-Bereich
- 3a: Zerkleinerungsraum
- 4: Trocknungs-Bereich
- 4a: Trocknungsbehälter
- 4b: Heizung
- 4c: Vakuum-Pumpe
- 4d: Mischeinrichtung
- 4e: Temperatur-Sensor
- 4f: Druck-Sensor
- 4g: Stellventil
- 5: mechanischer Verarbeitungs-Bereich
- 6: Einlass-Öffnung
- 7: Auslass-Öffnung
- 8: Steuereinrichtung
- 9: Abgasbehandlungs-Einrichtung
- 10: Inertgas
- 100: zu recycelnde Batterien
- 101: Zerkleinerungsgut
- dp: Druckgradient
- dT: Temperaturgradient
- L: Lösemittel
- LL: niedrigsiedende Lösemittel
- LH: hochsiedende Lösemittel
- pE: End-Umgebungsdruck
- plst: Ist-Umgebungsdruck
- pSoll: Soll-Umgebungsdruck
- pZ: Zwischen-Umgebungsdruck
- tB: Behandlungszeit
- TE: End-Umgebungstemperatur
- Tlst: Ist-Umgebungstemperatur
- TSoll: Soll-Umgebungstemperatur
- TZ: Zerkleinerungstemperatur
- tW: Wartezeit

- ST1, ST2, ST2.1, ST2.2, ST2.3, ST2.4, ST3: Schritte des Verfahrens

## Patentansprüche

1. Verfahren zum Aufbereiten von zu recycelnden Batterien (100), insbesondere Li-Ionen-Batterien, mit mindestens den folgenden Schritten:
- Bereitstellen mindestens einer zu recycelnden Batterie (100);
- Zerkleinern der bereitgestellten, zu recycelnden Batterie (100), um Zerkleinerungsgut (101) zu erhalten (ST0), wobei die bereitgestellte, zu recycelnde Batterie (100) und/oder das daraus erhaltene Zerkleinerungsgut (101) in einem Zerkleinerungsraum (3a) durch ein Aufheizen auf eine Zerkleinerungstemperatur (TZ), die kleiner als 100°C ist, thermisch vorbehandelt wird;
- Überführen des Zerkleinerungsgutes (101) in einen Trocknungsbehälter (4a) (ST1) und thermisches Behandeln des Zerkleinerungsgutes (101) durch Erhöhen einer Ist-Umgebungstemperatur (Tlst) und Verringern eines Ist-Umgebungsdruckes (plst) in dem Trocknungsbehälter (4a) (ST2), um das Zerkleinerungsgut (101) in dem Trocknungsbehälter (4a) zu erwärmen und in dem Zerkleinerungsgut (101) enthaltende Lösemittel (L) zu verdampfen,
wobei die Ist-Umgebungstemperatur (Tlst) in dem Trocknungsbehälter (4a) derartig eingestellt wird, dass sich das Zerkleinerungsgut (101) auf nicht mehr als 200°C erwärmt, wobei die Ist-Umgebungstemperatur (Tlst) in dem Trocknungsbehälter (4a) während der thermischen Behandlung des Zerkleinerungsgutes (101) auf eine vorgegebene End-Umgebungstemperatur (TE) von zwischen 150°C und 200°C gebracht wird, und der Ist-Umgebungsdruck (plst) in dem Trocknungsbehälter (4a) derartig eingestellt wird, dass bei der eingestellten Ist-Umgebungstemperatur (Tlst) sowohl niedrigsiedende Lösemittel (LL) als auch hochsiedende Lösemittel (LH) durch Verdampfen aus dem Zerkleinerungsgut (101) abgetrennt werden, wobei die niedrigsiedenden Lösemittel (LL) und die hochsiedenden Lösemittel (LH) während der thermischen Behandlung des Zerkleinerungsgutes (101) aus demselben Trocknungsbehälter (4a) abgeführt werden (ST2.2), wobei
-- der Ist-Umgebungsdruck (plst) in dem Trocknungsbehälter (4a) während des Erhöhens der Ist-Umgebungstemperatur (Tlst) in dem Trocknungsbehälter (4a) erst dann verringert wird, wenn die Ist-Umgebungstemperatur (Tlst) in dem Trocknungsbehälter (4a) die vorgegebene End-Umgebungstemperatur (TE) erreicht hat (ST2.1), wobei der Ist-Umgebungsdruck (plst) in dem Trocknungsbehälter (4a) bis dahin auf einem Atmosphärendruck gehalten wird, oder
-- der Ist-Umgebungsdruck (plst) in dem Trocknungsbehälter (4a) mit einem Druckgradienten (dp) verringert wird, während die Ist-Umgebungstemperatur (Tlst) in dem Trocknungsbehälter (4a) mit einem Temperaturgradienten (dT) auf die vorgegebene End-Umgebungstemperatur (TE) gebracht wird, wobei der Druckgradient (dp) in Relation zum Temperaturgradient (dT) geringer ist; und
- mechanisches Aufbereiten des thermisch behandelten Zerkleinerungsgutes (101) (ST3).

2. Verfahren nach Anspruch 1, **dadurch gekennzeichnet, dass** das Zerkleinerungsgut (101) vor dem mechanischen Aufbereiten (ST3) in dem Zerkleinerungsraum (3a) thermisch vorbehandelt und in dem Trocknungsbehälter (4a) thermisch behandelt wird.

3. Verfahren nach einem der vorhergehenden Ansprüche, **dadurch gekennzeichnet, dass** die niedrigsiedenden Lösemittel (LL) und die hochsiedenden Lösemittel (LH) während der thermischen Behandlung des Zerkleinerungsgutes (101) im Trocknungsbehälter (4a) zumindest zeitweise gemeinsam und/oder zumindest zeitweise getrennt voneinander aus demselben Trocknungsbehälter (4a) abgeführt werden (ST2.2).

4. Verfahren nach einem der vorhergehenden Ansprüche, **dadurch gekennzeichnet, dass** das in dem Trocknungsbehälter (4a) befindliche Zerkleinerungsgut (101) zwischen dem Abtrennen der niedrigsiedenden Lösemittel (LL) und dem Abtrennen der hochsiedenden Lösemittel (LH) nicht aus dem Trocknungsbehälter (4a) entnommen wird, um ein Abführen der niedrigsiedenden Lösemittel (LL) und der hochsiedenden Lösemittel (LH) aus demselben Trocknungsbehälter (4a) zu ermöglichen.

5. Verfahren nach einem der vorhergehenden Ansprüche, **dadurch gekennzeichnet, dass** der Ist-Umgebungsdruck (plst) in dem Trocknungsbehälter (4a) während der thermischen Behandlung des Zerkleinerungsgutes (101) (ST2) auf einen End-Umgebungsdruck (pE) von zwischen 0,01mbar und 100mbar, insbesondere zwischen 30mbar und 100mbar, vorzugsweise 30mbar, verringert wird.

6. Verfahren nach Anspruch 5, **dadurch gekennzeichnet, dass** der Ist-Umgebungsdruck (plst) in dem Trocknungsbehälter (4a) während der thermischen Behandlung des Zerkleinerungsgutes (101) (ST2) temporär auf einen vorgegeben Zwischen-Umgebungsdruck (pZ) erhöht wird (ST2.3), vorzugsweise ausgehend von dem vorher eingestellten End-Umgebungsdruck (pE), und der Ist-Umgebungsdruck (plst) nach einer Wartezeit (tW) ausgehend von dem Zwischen-Umgebungsdruck (pZ) wieder verringert wird (ST2.4), vorzugsweise auf den End-Umgebungsdruck (pE).

7. Verfahren nach Anspruch 6, **dadurch gekennzeichnet, dass** der Zwischen-Umgebungsdruck (pZ) beispielsweise zwischen 500mbar und 1000mbar liegt, vorzugsweise bei 1000mbar.

8. Verfahren nach Anspruch 6 oder 7, **dadurch gekennzeichnet, dass** das temporäre Erhöhen des Ist-Umgebungsdruckes (plSt) in dem Trocknungsbehälter (4a) auf den Zwischen-Umgebungsdruck (pZ) (ST2.3) und das anschließende Verringern des Ist-Umgebungsdruckes (plst) nach der Wartezeit (tW) (ST2.4) während der thermischen Behandlung des Zerkleinerungsgutes (101) in dem Trocknungsbehälter (4a) (ST2) mehrfach durchgeführt wird.

9. Verfahren nach einem der vorhergehenden Ansprüche, **dadurch gekennzeichnet, dass** die Ist-Umgebungstemperatur (Tlst) in dem Trocknungsbehälter (4a) während der thermischen Behandlung des Zerkleinerungsgutes (101) (ST2) auf eine vorgegebene End-Umgebungstemperatur (TE) von 150°C gebracht wird.

10. Verfahren nach einem der vorhergehenden Ansprüche, **dadurch gekennzeichnet, dass** die thermische Behandlung des Zerkleinerungsgutes (101) in dem Trocknungsbehälter (4a) (ST2) diskontinuierlich erfolgt, wobei das thermisch zu behandelnden Zerkleinerungsgut (101) dazu in den Trocknungsbehälter (4a) überführt wird und der Trocknungsbehälter (4a) anschließend vakuumdicht verschlossen wird, bis das thermisch behandelte Zerkleinerungsgut (101) der mechanischen Aufbereitung zugeführt wird (ST3).

11. Verfahren nach einem der vorhergehenden Ansprüche, **dadurch gekennzeichnet, dass** das in den Trocknungsbehälter (4a) überführte Zerkleinerungsgut (101) vor und/oder während und/oder nach der thermischen Behandlung durchmischt und/oder aufgelockert wird, vorzugsweise durch eine Mischeinrichtung (4d).

12. Verfahren nach Anspruch 11, **dadurch gekennzeichnet, dass** die Mischeinrichtung (4d) zumindest während der thermischen Behandlung im Trocknungsbehälter (4a) aufgeheizt wird.

13. Verfahren nach einem der vorhergehenden Ansprüche, **dadurch gekennzeichnet, dass** vor und/oder während der thermischen Behandlung des Zerkleinerungsgutes (101) (ST2) ein Inertgas (10) in den Trocknungsbehälter (4a) eingebracht wird.

## Claims

1. Method for preparing batteries (100) to be recycled, in particular, Li-ion batteries, having at least the following steps:
- providing at least one battery (100) to be recycled;
- comminuting the provided battery (100) to be recycled in order to obtain comminuted material (101) (ST0), the provided battery (100) to be recycled and/or the comminuted material (101) obtained therefrom being thermally pre-treated in a comminuting chamber (3a) by being heated up to a comminuting temperature (TZ) which is lower than 100 °C;
- transferring the comminuted material (101) into a drying container (4a) (ST1) and thermally treating the comminuted material (101) by raising an actual ambient temperature (Tlst) and lowering an actual ambient pressure (plst) in the drying container (4a) (ST2) in order to heat the comminuted material (101) in the drying container (4a) and to vaporise solvents (L) contained in the comminuted material (101), wherein the actual ambient temperature (Tlst) in the drying container (4a) is set such that the comminuted material (101) is heated to no higher than 200°C, wherein the actual ambient temperature (Tlst) in the drying container (4a) is brought to a pre-determined final ambient temperature (TE) of between 150°C and 200°C, during the thermal treatment of the comminuted material (101), and the actual ambient pressure (plst) in the drying container (4a) is set such that both the low-boiling solvents (LL) as well as the high-boiling solvents (LH) are separated by being evaporated out of the comminuted material (101) at the set actual ambient temperature (Tlst), where the low-boiling solvents (LL) and the high-boiling solvents (LH) are discharged out of the same drying container (4a) during the thermal treatment of the comminuted material (101) (ST2.2), wherein
-- during the increasing of the actual ambient temperature (Tlst) in the drying container (4a) the actual ambient pressure (plst) in the drying container (4a) is reduced only when the actual ambient temperature (Tlst) in the drying container (4a) has reached the pre-determined final ambient temperature (TE) (ST2.1), where up to that point the actual ambient pressure (plst) in the drying container (4a) is maintained at an atmospheric pressure, or
-- the actual ambient pressure (plst) in the drying container (4a) is reduced using a pressure gradient (dp) while the actual ambient temperature (Tlst) in the drying container (4a) is brought to the pre-determined final ambient temperature (TE) using a temperature gradient (dT), where the pressure gradient (dp) is preferably smaller in relation to the temperature gradient (dT); and
- mechanically processing the thermally treated comminuted material (101) (ST3).

2. Method according to claim 1, **characterised in that** the comminuted material (101) is thermally pre-treated prior to the mechanical processing (ST3) in the comminuting chamber (3a) and is thermally treated in the drying container (4a).

3. Method according to one of the above claims, **characterised in that** during the thermal treatment of the comminuted material (101) in the drying container (4a) the low-boiling solvents (LL) and the high-boiling solvents (LH) are discharged together, at least temporarily, and/or separately from one another, at least temporarily, from the same drying container (4a) (ST2.2).

4. Method according to one of the above claims, **characterised in that** the comminuted material (101) contained in the drying container (4a) is not removed from the drying container (4a) between the separating of the low-boiling solvents (LL) and the separating of the high-boiling solvents (LH), so as to allow for the low-boiling solvents (LL) and the high-boiling solvents (LH) to be discharged from the same drying container (4a).

5. Method according to one of the above claims, **characterised in that** the actual ambient pressure (plst) in the drying container (4a) is reduced during the thermal treatment of the comminuted material (101) (ST2) to a final ambient pressure (pE) of between 0.01mbar and 100mbar, in particular, between 30mbar and 100mbar, preferably 30mbar.

6. Method according to claim 5, **characterised in that** the actual ambient pressure (plst) in the drying container (4a) is temporarily increased during the thermal treatment of the comminuted material (101) (ST2) to a pre-determined intermediate ambient pressure (pZ) (ST2.3), preferably starting from the previously set final ambient pressure (pE), and after a holding period (tW) the actual ambient pressure (plst) is reduced again starting from the intermediate ambient pressure (pZ) (ST2.4), preferably down to the final ambient pressure (pE).

7. Method according to claim 6, **characterised in that** the intermediate ambient pressure (pZ) lies, for example, between 500mbar and 1000mbar, preferably at 1000mbar.

8. Method according to claim 6 or 7, **characterised in that** the temporary increasing of the actual ambient pressure (plSt) in the drying container (4a) to the intermediate ambient pressure (pZ) (ST2.3) and the subsequent reducing of the actual ambient pressure (plst) after the holding time (tW) (ST2.4) is carried out multiple times during the thermal treatment of the comminuted material (101) in the drying container (4a) (ST2).

9. Method according to one of the above claims, **characterised in that** the actual ambient temperature (Tlst) in the drying container (4a) is brought to a pre-determined final ambient temperature (TE) of 150°C during the thermal treatment of the comminuted material (101) (ST2).

10. Method according to one of the above claims, **characterised in that** the thermal treatment of the comminuted material (101) in the drying container (4a) (ST2) happens discontinuously, where, to that end, the comminuted material (101) to be thermally treated is transferred into the drying container (4a), and the drying container (4a) is subsequently sealed vacuum-tightly, until the thermally treated comminuted material (101) is transferred to mechanical processing (ST3).

11. Method according to one of the above claims, **characterised in that** the comminuted material (101) transferred into the drying container (4a) is intermixed and/or loosened before and/or during and/or after the thermal treatment, preferably using a mixing device (4d).

12. Method according to claim 11, **characterised in that** the mixing device (4d) is heated, at least during the thermal treatment in the drying container (4a).

13. Method according to one of the above claims, **characterised in that** prior to and/or during the thermal treatment of the comminuted material (101) (ST2) an inert gas (10) is introduced into the drying container (4a).

## Revendications

1. Procédé de traitement de batteries (100) à recycler, en particulier de batteries Li-ion, comprenant au moins les étapes suivantes :
- fourniture d'au moins une batterie (100) à recycler ;
- broyage de la batterie (100) à recycler fournie pour obtenir un broyat (101) (ST0), la batterie (100) à recycler fournie et/ou le broyat (101) ainsi obtenu étant prétraités thermiquement dans un espace de broyage (3a) par chauffage à une température de broyage (TZ) inférieure à 100 °C ;
- transfert du broyat (101) dans une cuve de séchage (4a) (ST1) et traitement thermique du broyat (101) par augmentation d'une température ambiante réelle (Tlst) et réduction d'une pression ambiante réelle (plst) dans la cuve de séchage (4a) (ST2) pour chauffer le broyat (101) dans la cuve de séchage (4a) et évaporer les solvants (L) contenus dans le broyat (101),
dans lequel la température ambiante réelle (Tlst) dans la cuve de séchage (4a) est réglée de sorte que le broyat (101) ne soit pas chauffé à plus de 200°C, la température ambiante réelle (Tlst) dans la cuve de séchage (4a) étant amenée à une température ambiante finale (TE) prédéfinie comprise entre 150°C et 200°C, et la pression ambiante réelle (plst) dans la cuve de séchage (4a) est réglée de sorte qu'à la température ambiante réelle (Tlst) réglée, les solvants (LL) à bas point d'ébullition ainsi que les solvants (LH) à haut point d'ébullition sont séparés du broyat (101) par évaporation, les solvants (LL) à bas point d'ébullition et les solvants (LH) à haut point d'ébullition étant évacués de la même cuve de séchage (4a) pendant le traitement thermique du broyat (101) (ST2.2), dans lequel
-- la pression ambiante réelle (plst) dans la cuve de séchage (4a) n'est réduite pendant l'augmentation de la température ambiante réelle (Tlst) dans la cuve de séchage (4a) que lorsque la température ambiante réelle (Tlst) dans la cuve de séchage (4a) a atteint la température ambiante finale (TE) prédéfinie (ST2.1), la pression ambiante réelle (plst) dans la cuve de séchage (4a) étant maintenue jusqu'alors à la pression atmosphérique, ou
-- la pression ambiante réelle (plst) dans la cuve de séchage (4a) est réduite avec un gradient de pression (dp) tandis que la température ambiante réelle (Tlst) dans la cuve de séchage (4a) est amenée à la température ambiante finale (TE) prédéfinie avec un gradient de température (dT), le gradient de pression (dp) étant inférieur au gradient de température (dT) ; et
- traitement mécanique du broyat (101) traité thermiquement (ST3).

2. Procédé selon la revendication 1, **caractérisé en ce que** le broyat (101) est prétraité thermiquement dans l'espace de broyage (3a) avant le traitement mécanique (ST3) et traité thermiquement dans la cuve de séchage (4a).

3. Procédé selon l'une des revendications précédentes, **caractérisé en ce que** les solvants (LL) à bas point d'ébullition et les solvants (LH) à haut point d'ébullition, pendant le traitement thermique du broyat (101) dans la cuve de séchage (4a), sont évacués au moins par moments ensemble et/ou au moins par moments séparément les uns des autres de la même cuve de séchage (4a) (ST2.2).

4. Procédé selon l'une des revendications précédentes, **caractérisé en ce que** le broyat (101) se trouvant dans la cuve de séchage (4a) n'est pas retiré de la cuve de séchage (4a) entre la séparation des solvants (LL) à bas point d'ébullition et la séparation des solvants (LH) à haut point d'ébullition, pour permettre l'évacuation des solvants (LL) à bas point d'ébullition et des solvants (LH) à haut point d'ébullition hors de la même cuve de séchage (4a).

5. Procédé selon l'une des revendications précédentes, **caractérisé en ce que** la pression ambiante réelle (plst) dans la cuve de séchage (4a) pendant le traitement thermique du broyat (101) (ST2) est réduite à une pression ambiante finale (pE) comprise entre 0,01 mbar et 100 mbar, en particulier entre 30 mbar et 100 mbar, de préférence de 30 mbar.

6. Procédé selon la revendication 5, **caractérisé en ce que** la pression ambiante réelle (plst) dans la cuve de séchage (4a), pendant le traitement thermique du broyat (101) (ST2), est temporairement augmentée (ST2.3) à une pression ambiante intermédiaire (pZ) prédéfinie, de préférence à partir de la pression ambiante finale (pE) réglée au préalable, et que la pression ambiante réelle (plst) est à nouveau réduite après un temps d'attente (tW) à partir de la pression ambiante intermédiaire (pZ) (ST2.4), de préférence à la pression ambiante finale (pE).

7. Procédé selon la revendication 6, **caractérisé en ce que** la pression ambiante intermédiaire (pZ) est comprise, par exemple, entre 500 mbar et 1 000 mbar, de préférence est de 1 000 mbar.

8. Procédé selon la revendication 6 ou 7, **caractérisé en ce que** l'augmentation temporaire de la pression ambiante réelle (plst) dans la cuve de séchage (4a) à la pression ambiante intermédiaire (pZ) (ST2.3) et la réduction consécutive de la pression ambiante réelle (plst) après le temps d'attente (tW) (ST2.4) pendant le traitement thermique du broyat (101) dans la cuve de séchage (4a) (ST2) sont réalisées plusieurs fois.

9. Procédé selon l'une des revendications précédentes, **caractérisé en ce que** la température ambiante réelle (Tlst) dans la cuve de séchage (4a) est amenée à une température ambiante finale (TE) prédéfinie de 150°C pendant le traitement thermique du broyat (101) (ST2).

10. Procédé selon l'une des revendications précédentes, **caractérisé en ce que** le traitement thermique du broyat (101) dans la cuve de séchage (4a) (ST2) est effectué de manière discontinue, le broyat (101) à traiter thermiquement étant transféré à cet effet dans la cuve de séchage (4a) et la cuve de séchage (4a) étant ensuite fermée de manière étanche au vide jusqu'à ce que le broyat (101) traité thermiquement soit acheminé vers le traitement mécanique (ST3).

11. Procédé selon l'une des revendications précédentes, **caractérisé en ce que** le broyat (101) transféré dans la cuve de séchage (4a) est mélangé et/ou aéré avant et/ou pendant et/ou après le traitement thermique, de préférence à l'aide d'un dispositif de mélange (4d).

12. Procédé selon la revendication 11, **caractérisé en ce que** le dispositif de mélange (4d) est chauffé au moins pendant le traitement thermique dans la cuve de séchage (4a).

13. Procédé selon l'une des revendications précédentes, **caractérisé en ce qu'**un gaz inerte (10) est introduit dans la cuve de séchage (4a) avant et/ou pendant le traitement thermique du broyat (101) (ST2).
